# EUROPÄISCHE PATENTANMELDUNG

(11) **EP 4 748 511 A1**
(43) Veröffentlichungstag der Anmeldung: **27.05.2026**
(21) Anmeldenummer: 24214199.2
(22) Anmeldetag: 20.11.2024
(51) Int. Cl.: B21D 28/00, B21D 28/32, B21D 37/04, B30B 15/00, B30B 15/02, F16C 7/06

(54) **VERSTELLBARE KOPPEL FÜR EIN STANZ- UND UMFORMWERKZEUG SOWIE STANZ- UND/ODER UMFORMMASCHINE MIT VERSTELLBARER KOPPEL**

(71) Anmelder: Inovan GmbH & Co. KG, 75217 Birkenfeld (DE)
(72) Erfinder: Wüst, Stephan, 75245 Neulingen (DE); Zacker, Robin, 75217 Birkenfeld (DE); Eberle, Timo, 75236 Kämpfelbach (DE)
(74) Vertreter: DTS Patent- und Rechtsanwälte PartmbB

(57) **Zusammenfassung**

Die vorliegende Erfindung betrifft eine verstellbare Koppel für ein Stanz- und Umformwerkzeug zum Verbinden eines Stempels mit einem Antriebsstößel, so dass ein Kraftübertrag von dem Antriebsstößel auf den Stempel erfolgen kann, so dass der Stempel einen Stanz- und/oder Umformprozess an einem Werkstück bewirkt, mit einem Stößelelement 1 und einem Stempelelement 2, die so miteinander verbunden sind, dass sie beweglich in Längsrichtung zwischen Stempel und Antriebsstößel zueinander sind, wobei zwischen Stößelelement 1 und Stempelelement 2 eine Verstellschraube 30 angeordnet ist, die mit einem Stellkeil 31 zusammenwirkt, dessen Position in Richtung des Schaftes 36 der Verstellschraube 30 in Längsrichtung von der Winkelstellung der Verstellschraube 30 abhängt, wobei der Stellkeil 31 an in Längsrichtung entgegengesetzten Seiten mit einer ersten Einstellflächen 32 an einer ersten Anschlagfläche 12 des Stößelelements 1 und mit einer zweiten Einstellfläche 37 an einer zweiten Anschlagfläche 22 des Stempelelements 2 anliegt, wobei mindestens eine der Kombinationen aus erster Einstellfläche 32 und erster Anschlagfläche 12 oder aus zweiter Einstellfläche 37 und zweiter Anschlagfläche 22 schräg gegenüber der Richtung des Schaftes 36 der Verstellschraube 30 ausgebildet ist, wobei der Stellkeil 31 selbsthemmend ist und/oder die Verstellschraube 30 mit einer Klemmvorrichtung 4, die die Winkelstellung der Verstellschraube 30 fixiert, verbunden ist.

Darüber hinaus betrifft die Erfindung auch noch eine Stanz- und/oder Umformmaschine mit einer verstellbaren erfindungsgemäßen Koppel zwischen mindestens einem Stempel und mindestens einem Antriebsstößel.

## Beschreibung

Die vorliegende Erfindung betrifft eine verstellbare Koppel für ein Stanz- und Umformwerkzeug zum Verbinden eines Stempels mit einem Antriebsstößel, so dass ein Kraftübertrag von dem Antriebsstößel auf den Stempel erfolgen kann, so dass der Stempel einen Stanz- und/oder Umformprozess an einem Werkstück bewirkt, sowie eine Stanz- und/oder Umformmaschine mit einer verstellbaren Koppel zwischen mindestens einem Stempel und mindestens einem Antriebsstößel.

Bei einem Stanz- und/oder Umformprozess muss der Stempel über eine genau einzustellende Weglänge auf ein Werkstück einwirken (die wird auch als Eintauchtiefe bezeichnet) beziehungsweis der Totpunkt, also der Punkt, an dem die Bewegung des Stempels nicht mehr weiter geht, muss passend sein, damit das Werkstück die gewünschte Form erhält. Hierfür werden regelmäßig Unterlegplatten (die auch als Abstimmplatten bezeichnet werden) zwischen Stößel und Koppel platziert, um eine Feineinstellung der Eintauchtiefe durchzuführen. Dies ist jedoch arbeitsaufwendig und schwierig, da viele Bauteile bewegt, betätigt beziehungsweise beeinflusst werden müssen und die Stelle schlecht zugänglich ist.

Aus der DE 10 2019 215 750 A1 ist es deswegen bekannt, dass eine mehrteilige Koppel mit einem Koppelstößelelement und einem Koppelstempelelement verwendet wird, wobei diesen beiden Teile lösbar miteinander verbindbar sind und in einem teilgelösten Zustand noch verbunden aber gegeneinander beweglich sind. Hierzu wird für jede einzelne einzustellende Eintauchtiefe ein individuelles Anschlagelement in eine Öffnung im Koppelstößelelement eingesetzt, das in seiner Längenausdehnung entlang der Längsachse der Koppel unterschiedlich ist. Dieses Anschlagelement schlägt oben an das Koppelstößelelement und unten an das Koppelstempelelement an (jeweils bezogen auf die Längsachse der Koppel) und wird mittels einer Klemmschraube fest am Koppelstößelelement angeordnet. Bei jedem vorzunehmenden Wechsel der Eintauchtiefe muss dabei die Klemmschraube geöffnet, das Anschlagelement aus einem Satz vorhandener Anschlagelemente genommen werden, welches exakt die Höhe aufweist, die der gewünschten Eintauchtiefe entspricht, und dieses Anschlagelement muss dann für das bisherige Anschlagelement eingesetzt werden. Danach muss die Klemmschraube wieder angezogen werden. Das Vorhalten von einem Satz verschieden hoher Anschlagelemente ist aufwendig und fehleranfällig, da eines oder mehrere der Anschlagelemente während des Auswechselprozesses verloren gehen kann. Außerdem kann es sein, dass eine Eintauchtiefe gewünscht wird, zu der es kein Anschlagelement gibt, das exakt die benötigte Höhe aufweist.

Die Aufgabe der Erfindung ist es daher, eine verstellbare Koppel zur Verfügung zu stellen, bei der diese Nachteile überwunden werden.

Die Aufgabe wird erfindungsgemäß durch eine verstellbare Koppel für ein Stanzund Umformwerkzeug mit den Merkmalen des Patentanspruchs 1 gelöst. Vorteilhafte Ausgestaltungen sind in den Unteransprüchen angegeben.

Die erfindungsgemäße verstellbare Koppel für ein Stanz- und Umformwerkzeug weist ein Stößelelement und ein Stempelelement auf, die so miteinander verbunden sind, dass sie beweglich in Längsrichtung zwischen Stempel und Antriebsstößel zueinander sind. Dadurch kann die Einstellung der Eintauchtiefe ohne Auswechslung der gesamten Koppel erfolgen. Zwischen Stößelelement und Stempelelement ist eine Verstellschraube angeordnet, die mit einem Stellkeil zusammenwirkt, dessen Erstreckung in Längsrichtung von der Winkelstellung der Verstellschraube abhängt. Dadurch kann eine kontinuierliche Verstellung der Eintauchtiefe der Koppel erfolgen. Da der Stellkeil an in Längsrichtung entgegengesetzten Einstellflächen mit einer ersten Anschlagfläche des Stößelelements und mit einer zweiten Anschlagfläche des Stempelelements in Kontakt steht und mindestens eine der beiden Einstellflächen schräg gegenüber der Richtung des Schaftes der Verstellschraube ist, ist eine besonders einfache Realisierung möglich. Der Stellkeil ist selbsthemmend und/oder die Verstellschraube ist mit einer Klemmvorrichtung verbunden, die die Winkelstellung der Verstellschraube fixiert. Wenn der Stellkeil selbsthemmend ist, muss keine zusätzliche Vorrichtung vorhanden sein, die eine ungewollte Änderung der Eintauchtiefe verhindert. Wenn eine Klemmvorrichtung vorhanden ist, wird durch eine einfache und trotzdem zuverlässige Vorrichtung verhindert, dass sich die Eintauchtiefe ungewollt verändert.

Eine vorteilhafte Weiterbildung der Erfindung sieht vor, dass die erste Anschlagfläche die gleiche Neigung gegen die Längsachse aufweist, wie die erste Einstellfläche des Stellkeils und/oder die zweite Anschlagfläche die gleiche Neigung gegen die Längsachse aufweist, wie die zweite Einstellfläche des Stellkeils. Dadurch kann der Stellkeil mit mindestens einer seiner (geneigten) Einstellflächen kontinuierlich entlang der zugeordneten Anschlagfläche gleiten und es kann damit stufenlos die benötigter Eintauchtiefe der Koppel eingestellt werden.

Eine weitere vorteilhafte Weiterbildung der Erfindung sieht vor, dass eine Klemmvorrichtung zur Fixierung der Verstellschraube eine mit dem Stößelelement zusammenwirkende Sicherungsschraube und einen Klemmkörper, der mit der Sicherungsschraube, der Verstellschraube und dem Stößelelement zusammenwirkt, aufweist. Dadurch wird mittels einer einfach herzustellenden Vorrichtung gleichzeitig sicher die Festlegung der Verstellschraube gewährleistet.

Eine weitere vorteilhafte Weiterbildung der Erfindung sieht vor, dass der Klemmkörper U-förmig ausgebildet ist, sich die freien Enden der Schenkel des U im Bereich der Sicherungsschraube befinden und die Verstellschraube sich zwischen Sicherungsschraube und dem Übergangsbereich zwischen den beiden Schenkeln des U befindet. Dadurch kann der Klemmkörper einstückig ausgebildet werden, was zu einer einfacheren Handhabung bei der Verstellung führt.

Eine weitere vorteilhafte Weiterbildung der Erfindung sieht vor, dass an einem der Schenkel des Klemmkörpers eine Rippe und an dem Stößelelement eine dazu inverse Rinne ausgebildet sind. Dadurch wird eine einfache und sichere Möglichkeit realisiert, wie der Klemmkörper an seinem vorgesehenen Platz positioniert und gehalten werden kann.

Eine weitere vorteilhafte Weiterbildung der Erfindung sieht vor, dass einer der beiden Schenkel ein Einstellloch aufweist, das im montierten Zustand der Einzelteile der Koppel in Flucht mit dem Schraubenkopf der Verstellschraube angeordnet ist. Dadurch muss der Klemmkörper während der Verstellung der Eintauchtiefe der Koppel durch Drehen der Verstellschraube nicht von dem Stößelelement entfernt werden.

Eine weitere vorteilhafte Weiterbildung der Erfindung sieht vor, dass an einem der Schenkel des Klemmkörpers eine Einschuböffnung zur Aufnahme des Schraubenkopfs der Verstellschraube vorhanden ist. Dadurch kann der Klemmkörper bei vormontierter Verstellschraube über deren Schraubenkopf geschoben werden, während er an dem Stößelelement positioniert und festgelegt wird.

Eine weitere vorteilhafte Weiterbildung der Erfindung sieht vor, dass an der ersten Einstellfläche des Stellkeils eine erste Führungsschiene und am Stößelelement ein dazu inverser erster Führungssteg ausgebildet sind und/oder an der zweiten Einstellfläche des Stellkeils eine zweite Führungsschiene und am Stempelelement ein dazu inverser zweiter Führungssteg ausgebildet sind. Dadurch werden das Stößelelement und/oder das Stempelelement auf einfache Art und Weise während und nach der Drehung der Verstellschraube zur Änderung der Eindringtiefe der Koppel mit dem Stellkeil in Eingriff gehalten.

Die Aufgabe wird auch durch eine Stanz- und/oder Umformmaschine mit einer verstellbaren Koppel zwischen mindestens einem Stempel und mindestens einem Antriebsstößel mit den Merkmalen des Patentanspruchs 9 gelöst. Dadurch werden die oben zu der erfindungsgemäßen Koppel angegebenen Vorteile erzielt.

Weitere Einzelheiten und Vorteile der Erfindung werden nun anhand von in den Zeichnungen dargestellten Ausführungsbeispielen näher erläutert. Es zeigen:
- Fig. 1: eine erfindungsgemäße Koppel in einer perspektivischen Ansicht,
- Fig. 2: die erfindungsgemäße Koppel aus Fig. 1 in einem zerlegten Zustand in verkleinertem Maßstab gegenüber Fig. 1,
- Fig. 3a-b: ein erfindungsgemäßer Stellkeil in zwei Ansichten in vergrößertem Maßstab gegenüber Fig. 1,
- Fig. 4a-b: ein erfindungsgemäßer Klemmkörper in zwei Ansichten in leicht vergrößertem Maßstab gegenüber Fig. 1,

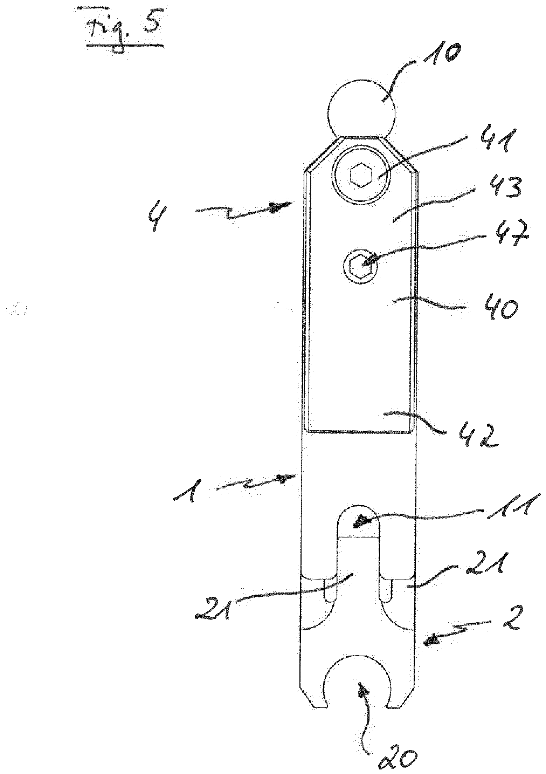

- Fig. 5: die erfindungsgemäße Koppel aus Fig. 1 in einer seitlichen Ansicht in leicht verkleinertem Maßstab gegenüber Fig. 1 und
- Fig. 6: die erfindungsgemäße Koppel aus Fig. 1 in einer Schnittansicht gemäß Linie A-A aus Fig. 5.

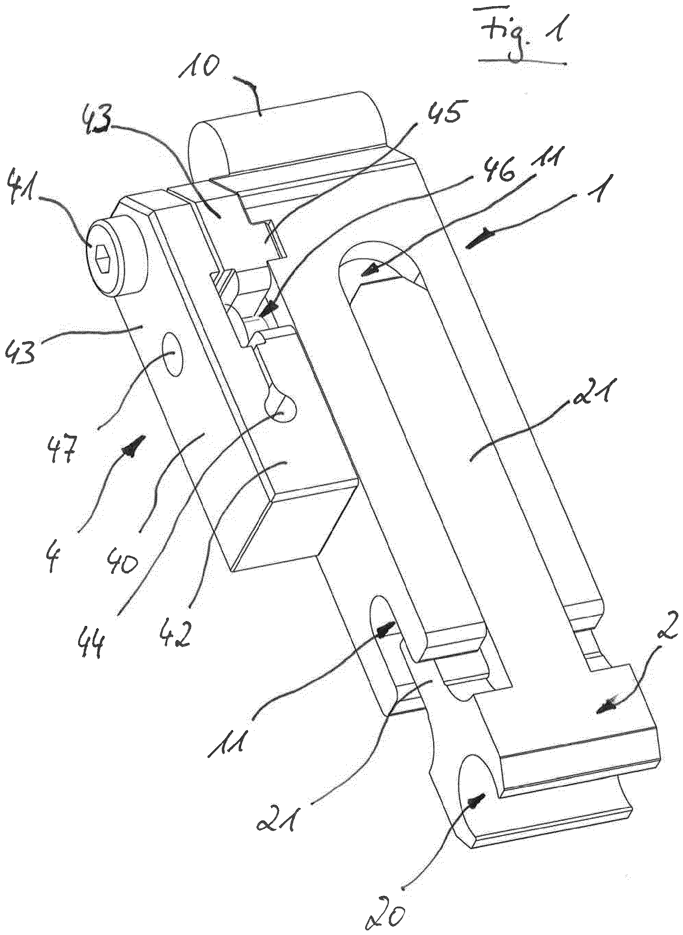

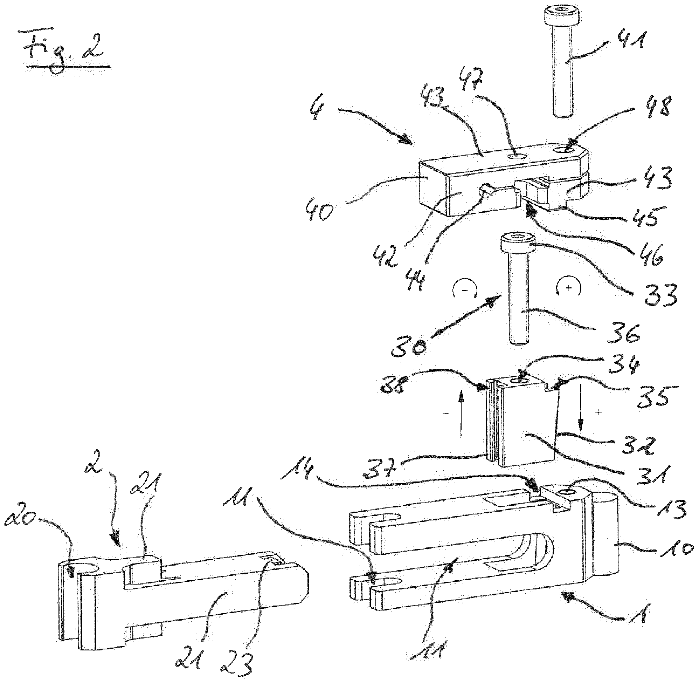

Fig. 1 zeigt eine erfindungsgemäße Koppel, die ein Stößelelement 1, ein Stempelelement 2, eine Verstellvorrichtung 3 und eine Klemmvorrichtung 4 aufweist. In Fig. 2 ist die Koppel aus Fig. 1 in einem in ihre einzelnen Bestandteile zerlegten Zustand um 45° gedreht gegenüber der Darstellung in Fig. 1 dargestellt. Die dort aufgeführten Bezugszeichen werden überwiegend im Zusammenhang mit den weiteren Figuren, in denen die Einzelteile dargestellt sind, erläutert (gegebenenfalls unter Bezugnahme auf Fig. 2).

Stößelelement 1 und Stempelelement 2 können sich relativ zueinander Bewegen. Um die Relativbewegung zu führen, sind am Stempelelement 2 zwei plus zwei Führungsvorsprünge 21 und am Stößelelement 1 zwei plus zwei Führungsnuten 11 ausgebildet, und zwar so, dass die Bewegung nur in einer Richtung erfolgen kann, die von einem Stößelkopplungsmittel 10 am Stößelelement 2 zu einem Stempelkopplungsmittel 20 am Stempelelement 2 - in der Darstellung in vertikaler Richtung - verläuft. Dadurch ist sichergestellt, dass die relative Bewegung präzise genau dem Zweck dient, den Abstand zwischen an die Koppel angekoppelte Stempel und Antriebsstößel (beide nicht dargestellt) zu verändern, um die Eintauchtiefe einzustellen.

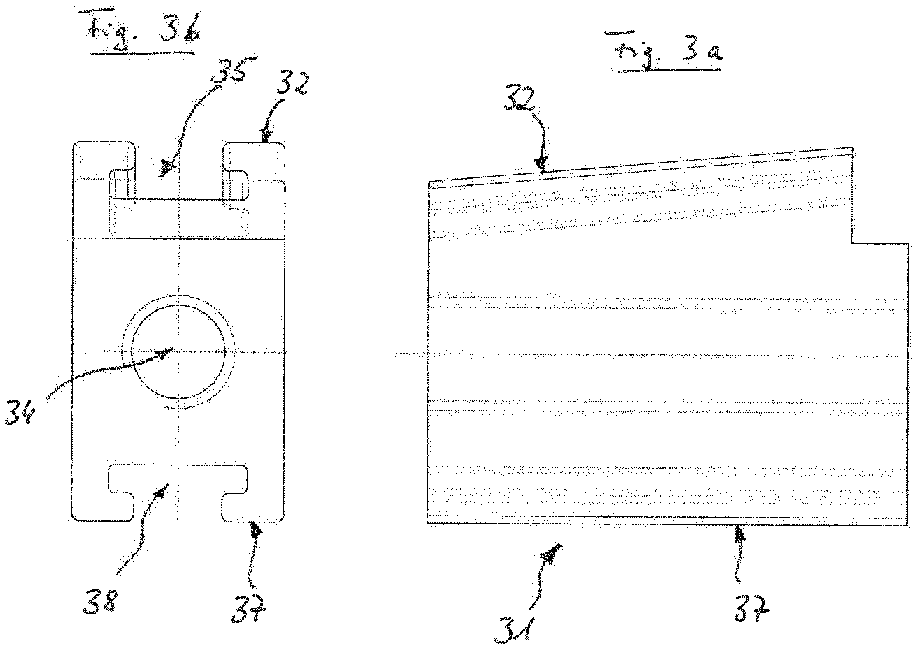

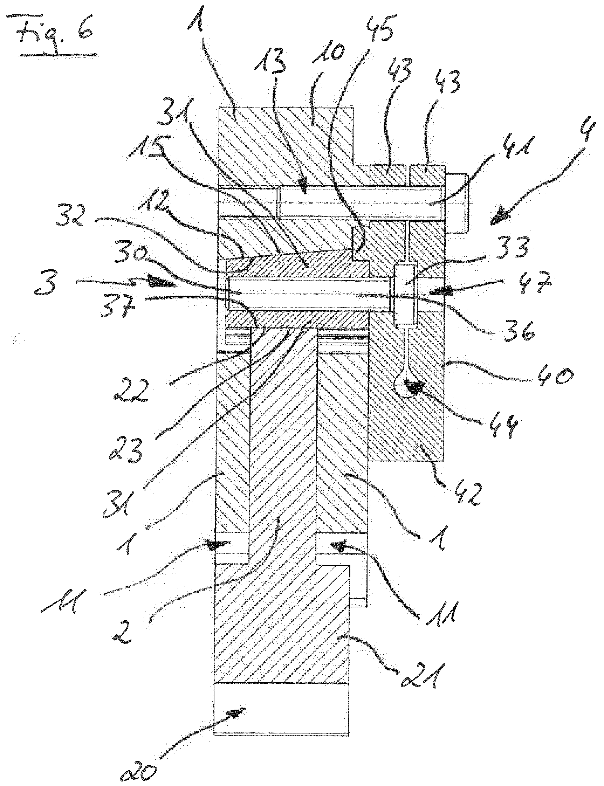

Um die Eintauchstelle präzise und stufenlos einstellen zu können, ist zwischen dem Stößelelement 1 und dem Stempelelement 2 eine Verstellvorrichtung 3 vorhanden, wie es in Fig. 6 dargestellt ist. Im dargestellten Ausführungsbeispiel besteht die Verstellvorrichtung 3 aus einem Stellkeil 31 und einer Verstellschraube 30, die ihn (siehe auch Fig. 3a und 3b) durchsetzt.

Der Stellkeil 31 weist an seinem oberen Ende (bezogen auf die Einbaurichtung gemäß Fig. 1) eine erste Führungsschiene 35 mit Hinterschnitt und an seinem unteren Ende (bezogen auf die Einbaurichtung gemäß Fig. 1) eine zweite Führungsschiene 38 mit Hinterschnitt auf. Zentral wird der Stellkeil 31 in horizontaler Richtung von einem Innengewinde 34 durchsetzt, in das die Verstellschraube 30 mit ihrem an ihrem Schaft 36 ausgebildeten Gewinde eingreift. Die erste Führungsschiene 35 wirkt mit einem invers zu dieser ausgebildeten ersten Führungssteg 15 (siehe Fig. 6) an dem Stößelelement 1 zusammen und die zweite Führungsschiene 38 wirkt mit einem invers zu dieser ausgebildeten zweiten Führungssteg 23 (siehe Fig. 2 und 6) an dem Stempelelement 2 zusammen, indem der jeweilige Führungssteg 15, 23 in der zugeordneten Führungsschiene 35, 38 gleitet. Aufgrund der gewählten Perspektive ist in Fig. 2 nur der zweite Führungssteg 23 am rechten Ende des Stempelelements 2 dargestellt. Eine entsprechende Führung ist auch am Stößelelement 1 in dem Bereich ausgebildet, in dem das obere Ende des Stellkeils 31, das in den Fig. 2, 3a, 3b und 6 als erste Einstellfläche 32 bezeichnet ist, am Stößelelement 1 angeordnet ist. Die der ersten Einstellfläche 32 des Steilkeils 31 gegenüberliegende Anlagefläche des Stößelelements 1 weist in Fig. 6 eine als erste Anschlagfläche 12 dargestellte, schräg verlaufende Fläche auf, an der der invers zur ersten Führungsschiene 35 des Stellekeils 31 ausgebildete erste Führungssteg 15 vorhanden ist. Hingegen verläuft die Anlagefläche zwischen dem unteren Ende des Einstellkeils 31 (in Fig. 6) und dem Stempelelement 2 in horizontaler Richtung. Sie wird auf Seiten des Stempelelements 2 als zweite Anschlagfläche 22 (siehe Fig. 6) und auf Seiten des Stellkeils 31 als zweite Einstellfläche 37 (siehe Fig. 3, 3a, 3b und 6) bezeichnet. Damit ergibt sich, dass die Eintauchtiefe - die von der Gesamtlänge der Koppel vom Stößelkopplungsmittel 10 bis zum Stempelkopplungsmittel 20 abhängt - davon abhängt, wie weit der Stellkeil 31 in horizontaler Richtung in Fig. 6 nach links in das Stößelelement 1 eintaucht.

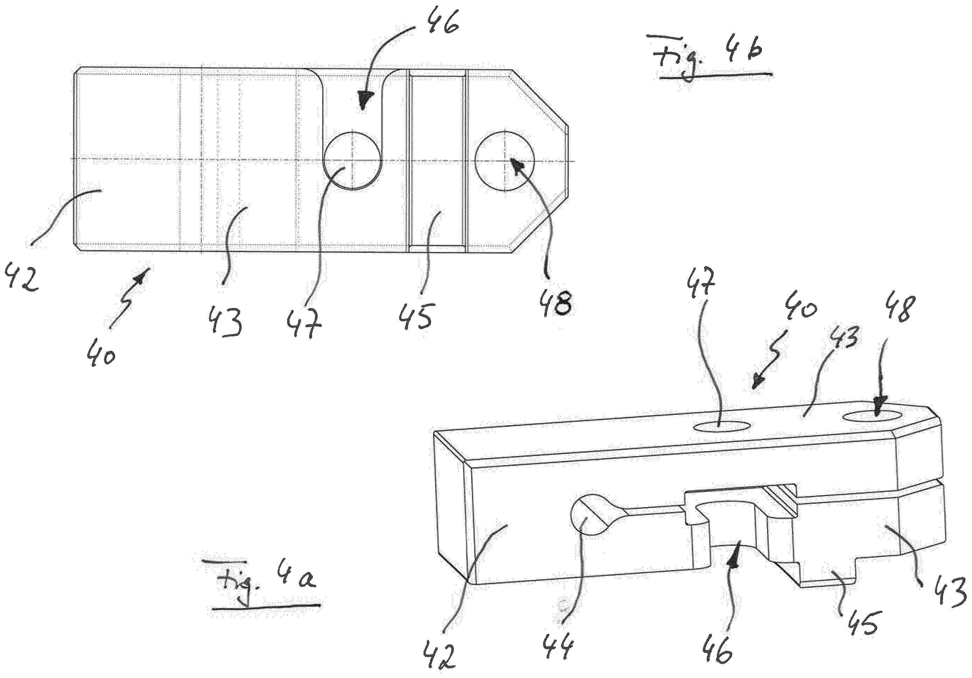

Die Eintauchtiefe des Stellkeils 31 in das Stößelelement 1 wird durch Drehen der Verstellschraube 30 eingestellt. Hierzu wird der Schraubenkopf 33 der Verstellschraube 30 mittels der Klemmvorrichtung 4 immer am selben Platz gehalten (dies wird unten anhand der Erläuterungen zu den Fig. 4a und 4b ausgeführt) - er kann sich somit insbesondere nicht in horizontaler Richtung bewegen. Bei einer Drehung der Verstellschraube 30 im Uhrzeigersinn wird der Stellkeil 31 nach links bewegt und somit Stößelelement 1 und Stempelelement 2 in vertikaler Richtung voneinander weggedrückt, so dass die Gesamtlänge der Koppel zunimmt und somit die Eintauchtiefe beim Bearbeiten des Werkstücks vergrößert. Bei entgegengesetzter Drehung der Verstellschraube 30 wird der Stellkeil 31 nach rechts bewegt und somit der Abstand zwischen Stößelelement 1 und Stempelelement 2 in vertikaler Richtung verringert, wodurch die Eintauchtiefe der Koppel verringert wird. Die Änderung der Eintauchtiefe in Abhängigkeit von dem Gesamtdrehwinkel der Verstellschraube 30 hängt von dem Gewinde der verwendeten Verstellschraube 30 (und somit auch des Innengewindes 34 des Stellkeils 31) und der Steigung der ersten Einstellfläche 32 des Stellkeils 31 gegenüber der Mittelachse seines Innengewindes 34 ab.

Der Kopf der Verstellschraube 30 wird mittels der Klemmvorrichtung 4 fixiert, so dass sich die Verstellschraube 30 nicht unbeabsichtigt verdrehen kann. Die Klemmvorrichtung 30 ist einstückig ausgeführt und weist in ihrem in Fig. 6 dargestellten Querschnitt eine U-Form mit zwei vertikal verlaufenden Schenkeln 43 und im unteren Bereich mit einem diese beiden Schenkel 43 verbindenden Übergangsbereich 42 auf. Zwischen den beiden Schenkeln 43 ist oberhalb des Übergangsbereichs 42 ein Freiraum 44 ausgebildet, dessen Größe davon abhängt, wie stark der Klemmkörper mittels einer im Bereich der beiden oberen freien Enden der Schenkel 43 durch eine Sicherungsschraube 41 in horizontaler Richtung zusammengedrückt wird. Die Sicherungsschraube 41 durchgreift die beiden Schenkel 43 durch eine Bohrung 48 und greift in ein Sicherungsgewinde 13 im Stößelelement 1 ein.

Der Klemmkörper 40 weist seitlich eine Einschuböffnung 46 auf, mittel der er seitlich über den Schraubenkopf 33 der Verstellschraube 33 auf das Stößelelement 1 aufgeschoben werden kann, bis die in den Fig. 1 und 6 dargestellte Position erreicht ist und der Schraubenkopf 33 der Verstellschraube 30 in horizontaler Richtung am Ende der Einschuböffnung 46 anschlägt. Die exakte Ausrichtung des Klemmkörpers 40 an dem Stößelelement 1 wird auch dadurch erreicht, dass an ihrem Schenkel 43, der an dem Stößelelement 1 anliegt, eine horizontal verlaufende Rippe 45 ausgebildet ist, die in einer entsprechenden, an dem Stößelelement 1 ausgebildeten horizontal verlaufenden Rinne 14 angeordnet ist. Wenn der Klemmkörper 40 an seinem korrekten Platz ist, wird er mittels der Sicherungsschraube 41 so lange zusammengedrückt, bis der Schraubenkopf 33 der Verstellschraube 30 festgeklemmt ist und sich nicht mehr bewegen kann. Dies geschieht dadurch, dass die Sicherungsschraube 41 durch eine an dem oberen Ende der beiden Schenkel 43 ausgebildeten Bohrung 48 geführt und in ein entsprechendes Sicherungsgewinde 13 im Stößelelement 1 eingeschraubt wird. Dadurch wird sichergestellt, dass keine ungewollte Verdrehung der Verstellschraube 30 erfolgen kann.

Soll die Eintauchtiefe der Koppel geändert werden, wird die Sicherungsschraube 41 leicht gelöst, bis der Schraubenkopf 33 der Verstellschraube 30 nicht mehr geklemmt ist - aber weiterhin ortsfest ist - und sich in dem Innengewinde 34 des Stellkeils 31 drehen lässt. Dies ist durch ein Einstellloch 47 in dem dem Stößelelement 1 abgewandten Schenkel 43 möglich, wobei das Einstellloch 47 in der Flucht zu dem Schraubenkopf 33 der Verstellschraube 30 ausgebildet ist und durch das man mittels eines Inbusschlüssels in den Innensechskant am Schraubenkopf 33 eingreifen kann und die Verstellschraube 30 verdrehen kann. Ist die gewünschte Eintauchtiefe der Koppel erreicht, wird die Sicherungsschraube 41 wieder fest angezogen, bis der Schraubenkopf 33 der Verstellschraube 30 wieder sicher in der Klemmvorrichtung 4 festgeklemmt ist und sich nicht mehr drehen lässt.

### Bezugszeichenliste

- 1: Stößelelement
- 2: Stempelelement
- 3: Verstellvorrichtung
- 4: Klemmvorrichtung
- 10: Stößelkopplungsmittel
- 11: Führungsnut
- 12: erste Anschlagfläche
- 13: Sicherungsgewinde
- 14: Rinne
- 15: erster Führungssteg
- 20: Stempelkopplungsmittel
- 21: Führungsvorsprung
- 22: zweite Anschlagfläche
- 23: zweiter Führungssteg
- 30: Verstellschraube
- 31: Stellkeil
- 32: erste Einstellfläche
- 33: Schraubenkopf
- 34: Innengewinde
- 35: erste Führungsschiene
- 36: Schaft
- 37: zweite Einstellfläche
- 38: zweite Führungsschiene
- 40: Klemmkörper
- 41: Sicherungsschraube
- 42: Übergangsbereich
- 43: Schenkel
- 44: Freiraum
- 45: Rippe
- 46: Einschuböffnung
- 47: Einstellloch
- 48: Bohrung

## Patentansprüche

1. Verstellbare Koppel für ein Stanz- und Umformwerkzeug zum Verbinden eines Stempels mit einem Antriebsstößel, so dass ein Kraftübertrag von dem Antriebsstößel auf den Stempel erfolgen kann, so dass der Stempel einen Stanzund/oder Umformprozess an einem Werkstück bewirkt,
mit einem Stößelelement (1) und einem Stempelelement (2), die so miteinander verbunden sind, dass sie beweglich in Längsrichtung zwischen Stempel und Antriebsstößel zueinander sind,
wobei zwischen Stößelelement (1) und Stempelelement (2) eine Verstellschraube (30) angeordnet ist, die mit einem Stellkeil (31) zusammenwirkt, dessen Position in Richtung des Schaftes (36) der Verstellschraube (30) in Längsrichtung von der Winkelstellung der Verstellschraube (30) abhängt,
wobei der Stellkeil (31) an in Längsrichtung entgegengesetzten Seiten mit einer ersten Einstellflächen (32) an einer ersten Anschlagfläche (12) des Stößelelements (1) und mit einer zweiten Einstellfläche (37) an einer zweiten Anschlagfläche (22) des Stempelelements (2) anliegt,
wobei mindestens eine der Kombinationen aus erster Einstellfläche (32) und erster Anschlagfläche (12) oder aus zweiter Einstellfläche (37) und zweiter Anschlagfläche (22) schräg gegenüber der Richtung des Schaftes (36) der Verstellschraube (30) ausgebildet ist,
wobei der Stellkeil (31) selbsthemmend ist und/oder die Verstellschraube (30) mit einer Klemmvorrichtung (4), die die Winkelstellung der Verstellschraube (30) fixiert, verbunden ist.

2. Verstellbare Koppel nach Patentanspruch 1, wobei die erste Anschlagfläche (12) die gleiche Neigung gegen die Längsachse aufweist, wie die erste Einstellfläche (32) des Stellkeils (31) und/oder die zweite Anschlagfläche (22) die gleiche Neigung gegen die Längsachse aufweist, wie die zweite Einstellfläche (37) des Stellkeils (31).

3. Verstellbare Koppel nach einem der vorangehenden Patentansprüche, wobei eine Klemmvorrichtung (4) zur Fixierung der Verstellschraube (30) eine mit dem Stößelelement (1) zusammenwirkende Sicherungsschraube (41) und einen Klemmkörper (40), der mit der Sicherungsschraube (41), der Verstellschraube (30) und dem Stößelelement (1) zusammenwirkt, aufweist.

4. Verstellbare Koppel nach Patentanspruch 3, wobei der Klemmkörper (40) U-förmig ausgebildet ist, sich die freien Enden der Schenkel (43) des U im Bereich der Sicherungsschraube (41) befinden und die Verstellschraube (30) sich zwischen Sicherungsschraube (41) und dem Übergangsbereich (42) zwischen den beiden Schenkeln (43) des U befindet.

5. Verstellbare Koppel nach Patentanspruch 4, wobei an einem der Schenkel (43) des Klemmkörpers (40) eine Rippe (45) und an dem Stößelelement (1) eine dazu inverse Rinne (14) ausgebildet sind.

6. Verstellbare Koppel nach einem der Patentansprüche 4 oder 5, wobei einer der beiden Schenkel (43) ein Einstellloch (47) aufweist, das im montierten Zustand der Einzelteile der Koppel in Flucht mit dem Schraubenkopf (33) der Verstellschraube (30) angeordnet ist.

7. Verstellbare Koppel nach einem der Patentansprüche 4 bis 6, wobei an einem der Schenkel (43) des Klemmkörpers (40) eine Einschuböffnung zur Aufnahme des Schraubenkopfs (33) der Verstellschraube (30) vorhanden ist.

8. Verstellbare Koppel nach einem der vorangehenden Patentansprüche, wobei an der ersten Einstellfläche (32) des Stellkeils (31) eine erste Führungsschiene (35) und am Stößelelement (1) ein dazu inverser erster Führungssteg (15) ausgebildet sind und/oder an der zweiten Einstellfläche (37) des Stellkeils (31) eine zweite Führungsschiene (38) und am Stempelelement (2) ein dazu inverser zweiter Führungssteg (23) ausgebildet sind.

9. Stanz- und/oder Umformmaschine umfassend mindestens einen Stempel und mindestens einen Antriebsstößel, wobei mindestens eine Koppel nach einem der vorhergehenden Patentansprüche zwischen dem mindestens einen Stempel und dem mindestens einen Antriebsstößel angeordnet ist.
